# EUROPÄISCHE PATENTANMELDUNG

(11) **EP 1 855 020 A1**
(43) Veröffentlichungstag der Anmeldung: **14.11.2007**
(21) Anmeldenummer: 07007985.0
(22) Anmeldetag: 19.04.2007
(51) Int. Cl.: F16D 25/08

(54) **Geberzylinder**

(30) Priorität: 13.05.2006 DE 102006022460; 21.07.2006 DE 102006033738
(71) Anmelder: LuK Lamellen und Kupplungsbau Beteiligungs KG, 77813 Bühl (DE)
(72) Erfinder: Christiaens, Yannick, 45470 Loury (FR)

(57) **Zusammenfassung**

Geberzylinder, insbesondere für ein hydraulisches System umfassend den Geberzylinder, einen Nehmerzylinder sowie eine diese verbindende Druckleitung, wobei der Geberzylinder über eine Nachlaufeinrichtung verfügt, die eine Verbindung zwischen einem durch einen Geberzylinderkolben und ein Geberrylindergehäuse begrenzten Druckraum des Nehmerzylinders und einer Nachlaufbohrung herstellen kann, wobei die Nachlaufeinrichtung ein in dem Geberzylinderkolben angeordnetes Nachlaufventil umfasst.
Das Nachlaufventil ist ein Einwegeventil.

## Beschreibung

Die vorliegende Erfindung betrifft einen Geberzylinder, insbesondere für ein hydraulisches System, umfassend den Geberzylinder, einen Nehmerzylinder sowie eine diese verbindende Druckleitung, wobei der Geberzylinder über eine Nachlaufeinrichtung verfügt, die eine Verbindung zwischen einem durch einen Geberzylinderkolben und einen durch ein Geberzylindergehäuse begrenzten Druckraum des Nehmerzylinders und einer Nachlaufbohrung herstellen kann. Die Erfindung betrifft des Weiteren ein hydraulisches System mit einem derartigen Nehmerzylinder.

In hydraulischen Systemen von Kraftfahrzeugen, insbesondere hydraulischen Systemen zur Betätigung einer Kupplung im Antriebsstrang zwischen Motor und Getriebe des Kraftfahrzeuges, sind in der Regel Nachlaufeinrichtungen vorgesehen, die ein Nachbefüllen des hydraulischen Systems während des Betriebes, zum Beispiel wegen Verlust von Hydraulikflüssigkeit, aus einem Nachlaufbehälter ermöglichen. Verschiedene Nachlaufeinrichtungen sind beispielsweise in der DE 10205177 offenbart. Die dort vorgestellten Nachlaufeinrichtungen wirken unmittelbar mit einer Primärdichtung zusammen, so dass insbesondere die Lagerung der Primärdichtung aufwendig herzustellen ist und mehrere Funktionen gleichzeitig erfüllten muss.

Nachteilig an den bekannten Nachlaufeinrichtungen ist der relativ komplexe Aufbau und die vergleichsweise hohe Anzahl an Einzelteilen für den Geberzylinder.

Eine Aufgabe der vorliegenden Erfindung ist es daher, einen Geberzylinder anzugeben, der einen einfacheren Aufbau besitzt.

Dieses Problem wird gelöst durch einen Geberzylinder, insbesondere für ein hydraulisches System umfassend den Geberzylinder, einen Nehmerzylinder sowie eine diese verbindende Druckleitung, wobei der Geberzylinder über eine Nachlaufeinrichtung verfügt, die eine Verbindung zwischen einem durch einen Geberzylinderkolben und ein Geberzylindergehäuse begrenzten Druckraum des Nehmerzylinders und einer Nachlaufbohrung herstellen kann, wobei die Nachlaufeinrichtung ein in dem Geberzylinderkolben angeordnetes Nachlaufventil umfasst, wobei das Nachlaufventil ein Einwegeventil ist. Unter Nachlaufbohrung wird hier jede Form der hydraulischen Verbindung mit dem Nachlaufbehälter verstanden. Die Nachlaufeinrichtung hat die Funktion, den Nachlaufbehälter nur in bestimmten Betriebszuständen, wie einem bestimmten Druck im Druckraum oder einer bestimmten -z.B. der vollständig entlasteten- Stellung des Geberzylinderkolbens, mit dem Druckraum hydraulisch zu verbinden. Vorzugsweise ist dabei vorgesehen, dass das Nachlaufventil geschlossen ist, wenn der Druck in dem Druckraum höher ist als der Druck in der Nachlaufbohrung und das Nachlaufventil öffnet, wenn der Druck in der Nachlaufbohrung um einen Öffnungsdruck höher ist als der Druck in dem Druckraum. Das Nachlaufventil umfasst vorzugsweise einen Ventilkolben, der eine mit der Nachlaufbohrung in hydraulischer Verbindung stehende Ventilbohrung gegenüber dem Druckraum öffnet bzw. schließt.

Vorzugsweise ist vorgesehen, dass das Nachlaufventil geschlossen ist, wenn der Druck in dem Druckraum höher ist als der Druck in der Nachlaufbohrung und das Nachlaufventil öffnet, wenn der Druck in der Nachlaufbohrung um einen Öffnungsdruck höher ist als der Druck in dem Druckraum. Das Ventil lässt also eine Fluidströmung nur vom Nachlaufraum in den Druckraum zu.

Vorzugsweise ist vorgesehen, dass das Nachlaufventil eine Schlauchmanschette umfasst. Diese ist vorzugsweise aus einem elastischen Material wie z.B. Gummi oder dergleichen gefertigt und reib- und/oder formschlüssig an einem Ring, der in axialer Richtung von dem Geberzylinderkolben hervorragt, angeordnet. Der Ring wird vorzugsweise durch eine in einen Kolbenboden des Geberzylinderkolbens eingebrachte Ringnut gebildet. Unter Schlauchmanschette wird hier insbesondere jede Bauform eines ventils verstanden, bei der ein schlauchförmiges insbesondere aus Gummi oder einem Kunststoff gefertigtes elastisches Bauteil in eine Richtung verformt werden kann und dabei eine Durchflussöffnung nach Art eines Einwegeventils freigibt bzw. in die Gegenrichtung sperrt.

Vorzugsweise ist vorgesehen, dass der Nehmerzylinderkolben einen Kolbenkörper und eine Kolbenhülse umfasst, wobei das Nachlaufventil an der Kolbenhülse angeordnet ist. Die Kolbenhülse umfasst bevorzugt einen Teller, wobei zwischen Kolbenkörper und Teller eine Primärdichtung angeordnet ist.

Das eingangs genannte Problem wird auch gelöst durch ein hydraulisches System, insbesondere für eine Kupplungsausrückvorrichtung im Antriebsstrang eines Kraftfahrzeuges, umfassend einen Geberzylinder und einen Nehmerzylinder mit jeweils einem in den Zylindern axial verlagerbaren Kolben, wobei der Geberzylinder mittels einer Betätigungsvorrichtung Druck aufbaut und damit über eine mit Druckmittel befüllte Leitung den Nehmerzylinder beaufschlagt, wobei das hydraulische System einen erfindungsgemäßen Geberzylinder umfasst.

Im Folgenden werden Ausführungsbeispiele der Erfindung anhand der beiliegenden Zeichnungen erläutert. Dabei zeigen:
- Fig. 1: eine schematische Darstellung eines hydraulischen Systems anhand eines Ausführungsbeispiels einer Kupplungsausrückvorrichtung;
- Fig. 2: einen Schnitt durch ein Ausführungsbeispiel eines erfindungsgemäßen Geberzylinders Nachlaufventil;

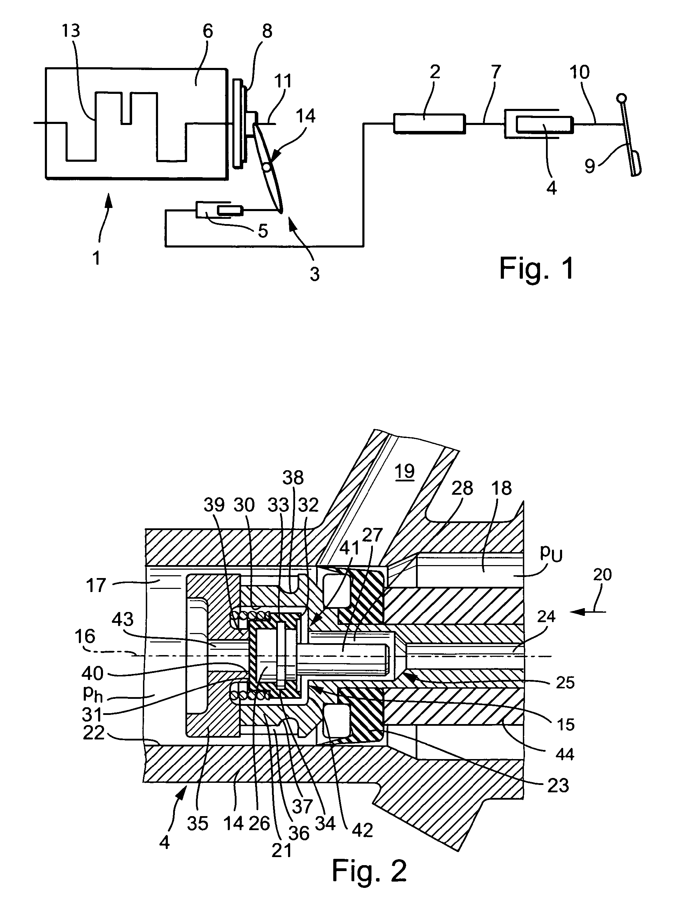

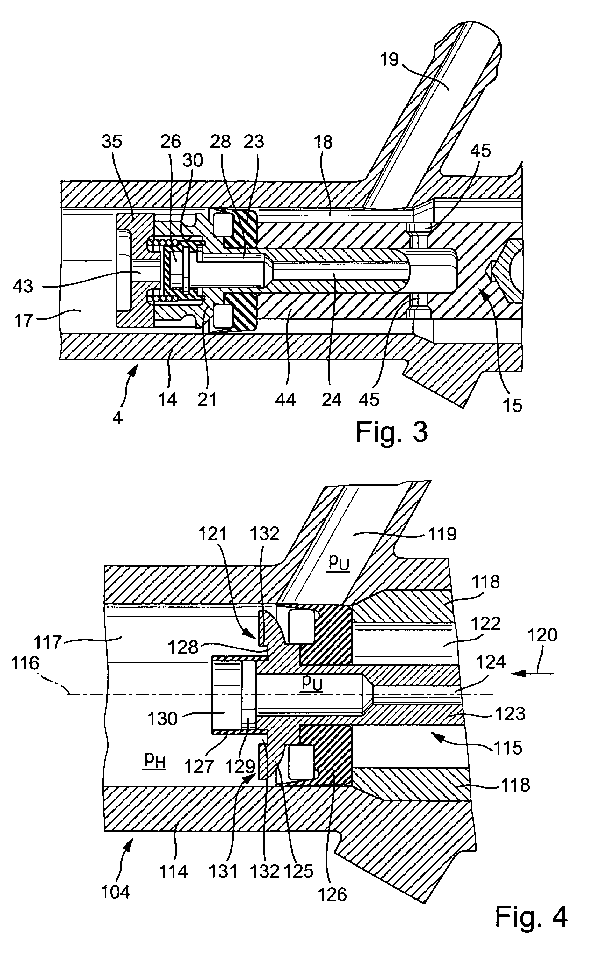

Fig. 1 zeigt in schematischer Darstellung eine mögliche Ausgestaltung eines hydraulischen Systems 1 mit einem Druckbegrenzungsventil (Kribbelfilter) 2 anhand einer Kupplungsausrückvorrichtung 3 mit einem Geberzylinder 4 und einem Nehmerzylinder 5. Das Kupplungsausrücksystem 3 betätigt die Kupplung 8 hydraulisch durch Beaufschlagung des Geberzylinders 4 mittels eines Betätigungsgliedes 9, das ein Fußpedal, ein Aktor, beispielsweise ein elektrischer Aktor, oder dergleichen sein kann. Hierdurch wird mittels einer mechanischen Übertragung 10 Druck im Geberzylinder 4 aufgebaut, der über die Druckleitung 7 sowie über das darin angeordnete Druckbegrenzungsventil 2 einen Druck im Nehmerzylinder 5 aufbaut. Der Nehmerzylinder 5 kann - wie in dem gezeigten Beispiel - konzentrisch um die Getriebeeingangswelle 11 angeordnet sein und sich axial an einem - nicht dargestellten - Getriebegehäuse abstützen und die nötige Ausrückkraft über ein Äusrücklager an der Kupplung 8, beziehungsweise an deren Ausrückelementen wie eine Tellerfeder, aufbringen. Weitere Ausführungsbeispiele können einen Nehmerzylinder 5, der über eine Ausrückmechanik 13 einen Ausrücker betätigt und außerhalb der Kupplungsglocke angeordnet ist, vorsehen, wobei dieser mittels eines in hydraulischer Verbindung mit dem Geberzylinder 4 stehenden im Nehmerzylindergehäuse untergebrachten Kolbens die Ausrückmechanik axial beaufschlagt. Zum Aufbringen der Ausrückkraft ist der Nehmerzylinder 5 jeweils gehäusefest am Getriebegehäuse, das hier nicht näher dargestellt ist, oder an einem anderen gehäusefesten Bauteil angebracht. Die Getriebeeingangswelle 11 überträgt bei geschlossener Kupplung 8 das Drehmoment der Kurbelwelle 6 der Brennkraftmaschine 12 auf ein nicht näher dargestelltes Getriebe und anschließend auf die Antriebsräder eines Kraftfahrzeuges. Das Druckbegrenzungsventil 2 ist zur Dämpfung von Schwingungen, die durch die Kurbelwelle und die Kupplung über den Nehmerzylinder in das hydraulische System eingebracht werden, in der Druckleitung 7 angeordnet.

Fig. 2 zeigt einen Teilschnitt durch einen erfindungsgemäßen Geberzylinder 4. Der Geberzylinder 4 umfasst ein Geberzylindergehäuse 14, in dem ein Geberzylinderkolben 15 axial beweglich entlang einer Verschiebe- und Rotationsachse 16 angeordnet ist. Der Geberzylinderkolben 15 schließt zusammen mit dem Geberzylindergehäuse 14 einen Druckraum 17 ein. Der Geberzylinder 4 umfasst des Weiteren einen Nachlaufraum 18, der über eine Nachlaufbohrung 19 mit einem nicht dargestellten, an sich bekannten Nachlaufbehälter verbunden ist. Der Nachlaufbehälter steht in der Regel unter Umgebungsdruck PU, so dass auch die Nachlaufbohrung 19 und der Nachlaufraum 18 unter Umgebungsdruck PU stehen. Bei einer Betätigung des Geberzylinderkolbens 15 in Druckrichtung 20 wird in dem Druckraum 17 ein Druck PH aufgebaut, der über die Druckleitung 7 an den Nehmerzylinder 5 weitergegeben wird und den Nehmerzylinder 5 in bekannter Weise betätigt.

Der Kolben 15 umfasst ein Rückschlagventil 21, das den Druckraum 17 mit dem Nachlaufraum 18 in der Weise verbindet, als dass bei einem Druck PU im Nachlaufraum 18, der größer ist als der Druck PH im Druckraum 17, das Rückschlagventil 21 öffnet und bei einem Druck PH größer als dem Druck PU das Rückschlagventil 21 angeschlossen ist. Es handelt sich bei dem Rückschlagventil 21 also um ein Ein-Wegeventil, das einen Durchfluss von Hydraulikflüssigkeit vom Nachlaufraum 18 in den Druckraum 17 ermöglicht und in die Gegenrichtung sperrt. Der Kolben 15 umfasst einen im Wesentlichen hohlzylindrischen Kolbenkörper 22, in den eine wiederum im Wesentlichen hohlzylindrische Kolbenhülse 23 eingesteckt ist. Die Kolbenhülse 23 umfasst eine Durchgangsbohrung 24, die in Richtung des Druckraums 17 durch das Rückschlagventil 21 abgeschlossen ist. Die Durchgangsbohrung 24 verbindet den Nachlaufraum 18 mit dem Druckraum 17, wobei diese Verbindung durch das Rückschlagventil 21 geöffnet bzw. geschlossen wird. Die Kolbenhülse 23 umfasst einen Teller 25, dessen Außendurchmesser geringfügig kleiner als der Innendurchmesser des Druckraums 17 ist. Zwischen dem Teller 25 und dem Kolbenkörper 22 ist eine Primärdichtung 26 angeordnet. Die Primärdichtung 26 dichtet bei einer Betätigung des Geberzylinderkolbens 15 den Druckraum 17 gegenüber dem Nachlaufraum 18 ab. Der Geberzylinderkolben 15 umfasst einen Kolbenboden 31, in den die Ringnut 28 eingebracht ist, sodass der Ring 29 in axialer Richtung in Richtung des Druckraums 17 von einem Nutboden 32 begrenzt wird.

Das Rückschlagventil 21 umfasst eine Schlauchmanschette 27, die auf einen Ring 29 der Kolbenhülse 23 aufgeschoben ist. Die Schlauchmanschette ist aus Gummi oder einem beliebigen anderen elastisch leicht verformbaren Material gefertigt. Der Ring 29 wird geformt durch eine Ringnut 28, die auf der Seite des Druckraums 17 in den Teller 25 eingebracht ist. Das Rückschlagventil 21 umfasst des Weiteren eine Einlagescheibe 30, die die Schlauchmanschette 27 in Richtung des Druckraums 17 abschließt. Die Schlauchmanschette 27 ist reibschlüssig, stoffschlüssig (z.B. durch Kleben) oder formschlüssig mit der Einlagescheibe 30 verbunden, sodass eine dauerhaft dichtende Verbindung zwischen beiden besteht. Die Verbindung zwischen der Schlauchmanschette 27 und dem Ring 29 ist so gestaltet, dass die Schlauchmanschette 27 bei einem Druck PU größer als dem Druck PH von ihrem Dichtungssitz mit der Ringnut 28 angehoben wird, sodass Hydraulikfluid von der Durchgangsbohrung 24 in den Druckraum 17 strömen kann. Ist der Druck PH im Druckraum 17 größer als der Druck PU im Nachlaufraum 18, so wird die Schlauchmanschette 27 in ihrem Dichtungssitz mit dem Ring 29 gepresst, sodass eine dichtende Verbindung besteht und keine Hydraulikflüssigkeit von dem Druckraum 17 in den Nachlaufraum 18 strömen kann.

Die Schlauchmanschette 27 kann zur axialen Fixierung auf dem Ring 29 beispielsweise Bohrungen aufweisen, in die radial von dem Ring 29 hervorstehende Erhebungen (z.B. radial abstehende abgerundete Bolzen oder dergleichen) eingreifen

### Bezugszeichenliste

- 1: Hydraulisches System
- 2: Druckbegrenzungsventil
- 3: Kupplungsausrückvorrichtung
- 4: Geberzylinder
- 5: Nehmerzylinder
- 6: Kurbelwelle
- 7: Druckleitung
- 8: Kupplung
- 9: Betätigungsglied
- 10: mechanischen Übertragung
- **11**: Getriebeeingangswelle
- 12: Brennkraftmaschine
- 13: Ausrückmechanik
- 14: Geberzylindergehäuse
- 15: Geberzylinderkolben
- 16: Verschiebe- und Rotationsachse
- 17: Druckraum
- 18: Nachlaufraum
- 19: Nachlaufbohrung
- 20: Druckrichtung
- 21: Rückschlagventil
- 22: Kolbenkörper
- 23: Kolbenhülse
- 24: Durchgangsbohrung
- 25: Teller
- 26: Primärdichtung
- 27: Schlauchmanschette
- 28: Ringnut
- 29: Ring
- 30: Einlagescheibe
- 31: Kolbenboden
- 32: Nutboden

## Patentansprüche

1. Geberzylinder (4), insbesondere für ein hydraulisches System (1) umfassend den Geberzylinder (4), einen Nehmerzylinder (5) sowie eine diese verbindende Druckleitung (7), wobei der Geberzylinder (4) über eine Nachlaufeinrichtung verfügt, die eine Verbindung zwischen einem durch einen Geberzylinderkolben (15) und ein Geberzylindergehäuse (14) begrenzten Druckraum (17) des Nehmerzylinders (5) und einer Nachlaufbohrung (19) herstellen kann, wobei die Nachlaufeinrichtung ein in dem Geberzylinderkolben (15) angeordnetes Nachlaufventil umfasst, **dadurch gekennzeichnet, dass** das Nachlaufventil ein Einwegeventil (21) ist.

2. Geberzylinder nach Anspruch 1, **dadurch gekennzeichnet, dass** das Nachlaufventil (21) geschlossen ist, wenn der Druck in dem Druckraum (17) höher ist als der Druck in der Nachlaufbohrung (19) und das Nachlaufventil (21) öffnet, wenn der Druck in der Nachlaufbohrung (19) um einen Öffnungsdruck höher ist als der Druck in dem Druckraum (17).

3. Geberzylinder nach Anspruch 2, **dadurch gekennzeichnet, dass** das Nachlaufventil (21) eine Schlauchmanschette (27) umfasst.

4. Geberzylinder nach Anspruch 3, **dadurch gekennzeichnet, dass** die Schlauchmanschette (27) reib- und/oder formschlüssig an einem Ring (29), der in axialer Richtung von dem Geberzylinderkolben (15) hervorragt, angeordnet ist.

5. Geberzylinder nach einem der Ansprüche 3 oder 4, **dadurch gekennzeichnet, dass** der Ring (29) durch eine in einen Kolbenboden (31) des Geberzylinderkolbens (15) eingebrachte Ringnut (28) gebildet wird.

6. Geberzylinder nach Anspruch 5, **dadurch gekennzeichnet, dass** der Nehmerzylinderkolben einen Kolbenkörper (22) und eine Kolbenhülse (23) umfasst, wobei das Nachlaufventil an der Kolbenhülse (23) angeordnet ist.

7. Geberzylinder nach Anspruch 6, **dadurch gekennzeichnet, dass** die Kolbenhülse (23) einen Teller (25) umfasst und zwischen Kolbenkörper (22) und Teller (25) eine Primärdichtung (26) angeordnet ist.

8. Hydraulisches System, insbesondere für eine Kupplungsausrückvorrichtung im Antriebsstrang eines Kraftfahrzeuges, umfassend einen Geberzylinder (4) und einen Nehmerzylinder (5) mit jeweils einem in den Zylindern axial verlagerbaren Kolben, wobei der Geberzylinder (4) mittels einer Betätigungsvorrichtung Druck aufbaut und damit über eine mit Druckmittel befüllte Leitung (7) den Nehmerzylinder (5) beaufschlagt, **dadurch gekennzeichnet, dass** das hydraulische System einen Geberzylinder (4) nach einem der vorhergehenden Ansprüche umfasst.
